# EUROPÄISCHE PATENTANMELDUNG

(11) **EP 4 525 375 A1**
(43) Veröffentlichungstag der Anmeldung: **19.03.2025**
(21) Anmeldenummer: 24173358.3
(22) Anmeldetag: 30.04.2024
(51) Int. Cl.: H04L 12/40, H04L 12/403

(54) **DATENVERARBEITUNGSSYSTEM MIT EINEM NETZWERK**

(71) Anmelder: PETER HIRT GmbH, 8606 Nänikon (CH)
(72) Erfinder: Hirt, Daniel, 8712 Stäfa (CH)
(74) Vertreter: Lermer, Christoph

(57) **Zusammenfassung**

Ein Netzwerk 1 weist Knoten und Endpunkte auf. Die Knoten und Endpunkte kommunizieren drahtlos oder über verdrahtete Leitungen, wobei die Teilnehmer unterschiedlichen Physical Layern angehören können. So können die Knoten 11, 12, 13 und die über einen Bus 14 verbundenen Knoten 141, 142, 143 einem ersten Physical Layer (mit einem ersten Transport-Protokoll) angehören. Der Knoten 2 kann ein Router sein, der das Netzwerk 1 mit dem Internet 3 verbindet. Die Knoten 41 und 42 gehören einem zweiten Physical Layer an. Im Rahmen der Erfindung tauschen die Knoten und Endpunkte über dezentrale Kommunikation codierte Datenpakete aus. Im Rahmen des Datenaustausches können die Knoten die Endadresse auscodieren, um ein Paket weiterzuleiten.

## Beschreibung

### STAND DER TECHNIK

In bekannten Netzwerken können beispielsweise Aktoren und/oder Sensoren angeschlossen werden und anschließend mit anderen Netzwerkknoten Daten und Informationen austauschen. Beim Anschließen kann der Sensor sensorspezifische Identifikationsdaten an eine Zentraleinheit senden, um dann von der Zentraleinheit konfiguriert zu werden. Im Betrieb können dezentral generierte Daten drahtlos oder drahtgebunden an eine zentrale Rechnereinheit weitergeleitet und dort ausgewertet werden.

In der Kommunikation bzw. dem Datenaustausch gibt es in klassischen Netzwerken in der Regel einen Master-Knoten und Slave-Knoten. Der Master übernimmt die Steuerfunktionen und erteilt einem oder mehreren Slaves das Recht, zu kommunizieren. Der Master bewerkstelligt die Datenverteilung (Datenadressierung und der Datenfluss) im Netzwerk.

Die Druckschrift US2009/0217755A1 offenbart ein System mit einer Steuerung und einem Sensor der einen Speicher und ein Datenerfassungsmodul (z.B. umfassend Sensoren) aufweist. Die Sensoren stellen in einer Kommunikation mit der Steuerung Knoten dar. Das Datenerfassungsmodul kann von den Sensoren gesammelte Daten an den Speicher weitergeben.

Problematisch bzw. aufwändig kann bei herkömmlichen Netzwerken die Integration und individuelle Konfiguration neuer Netzwerkteilnehmer (z.B. Aktoren oder Sensoren) sein. Sofern die Teilnehmer unterschiedlichen Physical Layern angehören und somit mit unterschiedlichen Transport-Protokollen bzw. Datalink-Protokollen kommunizieren, sind Medienbrüche im System vorhanden, die, um eine netzwerkübergreifende Kommunikation zwischen den Teilnehmern zu ermöglichen, durch Schnittstellen und Gateways überbrückt werden müssen.

### AUFGABE DER ERFINDUNG

Von daher besteht eine Aufgabe der Erfindung darin, ein Datenverarbeitungssystem mit einem Netzwerk bereitzustellen, in das neue Netzwerkknoten und -endpunkte einfach integrierbar sind, und bei dem verschiedene Netzwerkknoten und -endpunkte auch über unterschiedliche Physical Layers hinweg einfach kommunizieren können.

### TECHNISCHE LÖSUNG

Diese Aufgabe wird gelöst durch ein Datenverarbeitungssystem mit einem Netzwerk gemäß Anspruch 1. Vorteilhafte Ausführungsformen ergeben sich aus den Merkmalen der abhängigen Ansprüche.

Ein erfindungsgemäßes Datenverarbeitungssystem (oder auch Datenakquisitionssystem) mit einem Netzwerk umfasst mehrere Knoten und/oder Endpunkte sowie drahtlose und/oder drahtgebundene Kommunikationsverbindungen zwischen einzelnen Knoten und/oder Endpunkten, wobei der Datenaustausch über binäre Datenpakete erfolgt, wobei die Datenpakete codiert sind, und jeweils wenigstens ein Steuerungssymbol aufweisen.

Die Knoten und/oder Endpunkte des Netzwerks sind insbesondere dazu eingerichtet, die Datenpakete wenigstens teilweise zu codieren und/oder zu decodieren.

Die Knoten und/oder Endpunkte des Netzwerks können auch dazu eingerichtet sein, End- bzw. Zieladressen und/oder die Paketgröße aus Paketen zu extrahieren und zu decodieren.

Das Netzwerk kann sich über verschiedene Physical Layers erstrecken, z.B. als Kombination von Ethernet mit RS485, Bluetooth, usw.

Das Netzwerk kann einen Hauptknoten haben, welcher für die Ausgabe von Adressen zuständig ist.

Der Datenaustausch geschieht über Pakete beliebiger Länge, typischerweise aber maximal 512 Byte. Pakete haben Anfangs- und Endsymbole und beinhalten die Ausgangs- und Endadresse (Zieladresse). Jedes Paket ist durch eine Prüfsumme abgesichert. Knoten führen eine Tabelle für die Vermittlung von Paketen nach. Pakete werden von den Knoten gemäß der Vermittlungstabelle vermittelt.

Das Datenverarbeitungssystem kann wenigstens zwei verschiedene physikalische Layer bzw. Transport Layer bzw. Datalink Layer aufweisen. Die Übertragung der codierten Pakete erfolgt jedoch insbesondere über ein einheitliches, d.h. mehrere/alle im Netzwerk vorhandenen Physical Layer übergreifendes Protokoll. Das Netzwerk ist insbesondere so eingerichtet, dass die Übertragung der codierten Datenpakete einheitlich über zwei oder mehrere physikalische Layer erfolgen kann. Dies bedeutet, dass die Kommunikation, die im Stand der Technik mit verschiedenen Datalink Protokollen bzw. Transport Protokollen durchgeführt wird, im Rahmen der Erfindung identisch mit einem über das Netzwerk einheitlichen Protokoll erfolgen kann.

Die Steuerungssymbole weisen insbesondere wenigstens ein Anfangssymbol und ein Endsymbol auf, die den Anfang bzw. das Ende des Datenpakets kennzeichnen.

Im Rahmen der Erfindung wird ein neues Datenprotokoll für das gesamte System über die unterschiedlichen Transport- bzw. Datalink Layer hinweg bereitgestellt. Dies geschieht durch Anpassung einer Logik zum Codieren/Decodieren. Durch die Codierung wird ein neuer Dataframe erzeugt. Bei der Codierung der Daten entstehen außerdem Steuerungssymbole. Das Protokoll ist damit auf jedem 8- Bit Datenkanal oder sogar Speicher (Sicherung von eingehenden Daten und späterer Interpretation) abbildbar.

Bei der Codierung der Kommunikationsdaten entstehen ungenutzte Symbole. Diese werden für Steuerungssymbole (die den Paketanfang und das Paketende beinhalten) verwendet. Eine fortlaufende Codierung von 8 Bit auf 7 Bit hat sich als besonders günstig erwiesen. Damit wird das 8 Bit als Steuerungssymbol Indikator (Präambel, Paketanfang und Paketende, etc.) verwendet. Alternativ können prinzipiell auch andere Codierungsverfahren, wie die 8b/10b Codierung, verwendet werden. Durch die Codierung ist die Kommunikation auf jedem Voll- und Halbduplex 8-bit Stream (TCP, UDP, RS485, L2CAP, USB, etc.) des Physical Layers möglich.

Die Knoten können die Endadresse einfach auscodieren, um ein Paket weiterzuleiten. Dabei müssen nur wenige Bytes decodiert werden. Der entsprechende Rechenaufwand für die Codierung und Dekodierung des gesamten Dateninhalts entsteht damit nur bei den beiden Endteilnehmern (Anfrager und Antworter). Ein Knoten kann damit typischerweise mittels DMA (Direct Memory Access) einen großen Datendurchsatz erzielen.

Daten können über vorausgetauschte Schlüssel verschlüsselt werden. Daten können mit Public Key Verfahren verschlüsselt werden.

Im Rahmen des Systems führt jeder Knoten sein eigenes Routing durch, d.h. jeder Knoten hat einen Router integriert. Anders ausgedrückt ist jeder Endpunkt sowohl Router als auch Sensor. Kommt ein codiertes Datenpaket an, so kann über das Steuerungssymbol Anfangs- und Endpunkt und Länge/Checksumme bestimmt werden (das Steuerungssymbol beinhaltet Anfangs- und Endbyte). Durch Decodierung bestimmter Positionen werden Anfangs- und Endadresse ausgelesen und das Paket weiter verschickt. Die Senderadresse, Empfängeradresse und Paketlänge befinden sich am Anfang des Pakets und lassen sich schnell auscodieren.

Anders als in bisherigen reinen Datenerfassungssystemen gibt es keinen Punkt/Teilnehmer im System, der alles koordiniert, sondern die Knoten/Endpunkte können beliebig Daten auf andere Punkte/Teilnehmer schreiben und lesen.

Die Kommunikationsverbindung zwischen Knoten und Endpunkten geschieht über einen beliebigen Physical Layer bzw. ein beliebiges Protokoll (TCP, UDP, Zigbee, Bluetooth, RS232, RS485, USB, usw.) eines Transport- bzw. Datalink Layers, welcher den Austausch von Binärdaten (8- Bit-Stream) erlaubt. Die Kommunikation erfolgt somit über verschiedene Physical Layer völlig transparent, wodurch eine Kombination verschiedener Physical Layer in einem Netzwerk möglich ist. Ein baugleicher Sensor kann damit in unterschiedlichen Anwendungen in Netzwerken mit verschiedenen Transport-Protokollen bzw. Datalink-Protokollen eingesetzt werden. Für den Nutzer entfallen damit Medienbrüche und aufwändige Routing-Konfigurationen. Neue Technologien (Funk, Single Pair Ethernet) können nahtlos integriert werden.

Für Halbduplex und Busanordnungen übernimmt der jeweils übergeordnete Knoten die Koordination für die Datenversandfreigabe. Dies kann über TDMA (Time Division Multiplex) oder mittels Polling (individuelle Abfrage) geschehen.

In einer speziellen Ausführungsform der Erfindung kann ein Knoten mit Synchronisationssymbolen direkt darunter liegende Teilnehmer zeitlich synchronisieren. Eine zeitgleiche Annahme von Messwerten ist dadurch auch in unterliegenden Schichten möglich. Ebenso kann von unten nach oben synchronisiert werden.

Insbesondere synchronisiert bei einer Synchronisation von unten nach oben ein Endpunkt (z.B. Sensor) die darüber liegenden Knoten. z.B. indem ein Sensor, beispielsweise ein GPS Sensor, verwendet wird, welcher für andere Teilnehmer des Netzwerks eine genaue Zeit bereitstellt.

Das Protokoll sichert sich selbst ab und basiert nicht auf der Sicherung des Physical Layers und des jeweiligen Data Link Layers. Damit funktioniert das Protokoll fehlerfrei auch in gestörten Umgebungen.

Da das Protokoll ein komplettes Routing (Paketweiterleitung) verwendet, können Endpunkte beliebig Daten senden und empfangen. Damit können beispielsweise mehrere HMI (Human Machine Interfaces) angeschlossen werden.

Das Netzwerk kann insbesondere ein Sensor- und Aktornetzwerk mit wenigstens einem Sensor und/oder Aktor sein.

Die Erfindung wird realisiert in einem Netzwerk bzw. einer Baumstruktur bestehend aus Knoten und Endpunkten. Das Netzwerk ist prinzipiell ein geschlossenes System, das jedoch mit einem oder mehreren Gateways für einen Zugang ins Internet ausgestattet sein kann. Insbesondere bezieht sich die Erfindung auf Sensor-/Aktorsysteme mit wenigstens einem Sensor als Knoten bzw. Endpunkt.

Das Netzwerk kann zwei oder mehrere datenverarbeitende Endpunkte, beispielsweise HMI (Human Machine Interfaces) oder Sensoren, Aktoren, Inseln, o.a., aufweisen. So können Daten von mehreren Knoten/Endpunkten konkurrierend verarbeitet werden. Jeder Teilenehmer kann Daten von anderen Punkten sammeln und verarbeiten.

Das Datenverarbeitungssystem kann zudem eines oder mehrere datenverarbeitende, datendarstellende und datenweiterleitende Endpunkte und/oder Knoten, beispielsweise HMI, DAQ Rechner oder Gateways zu sonstig definierten Protokollen und Kommunikationssystemen (z.B. OPC/UA, MQTT, andere Feldbusse, RESTFul JSON usw.) aufweisen. Diese Endpunkte/Knoten verarbeiten die Daten und bereiten diese dann für ein anderes System bzw. für einen anderen Physical Layer auf.

Während in herkömmlichen Systemen das einzig vorgesehene Gateway immer der Masterknoten/- endpunkt ist, der jede Datenpaket-Weiterleitung steuert, können in Kommunikationssystemen gemäß der vorliegenden Erfindung beliebig viele der datenverarbeitenden, datendarstellenden und datenweiterleitenden Endpunkte und/oder Knoten vorgesehen sein, die selbstständig die Daten von anderen Knoten/Endpunkten abziehen können. Die Endpunkte profitieren von der erfindungsgemäß bereitgestellten Identifikation der Sensoren über einen eindeutigen Identifikator, wie VendorID, Artikelnummer und/oder Seriennummer.

Ein weiterer Aspekt der Erfindung besteht darin, dass Knoten und Endpunkte alle system- und anwenderrelevanten Daten bereitstellen. Diese Daten sind beispielsweise die Spezifikationen der ein- und ausgehenden Prozessdaten, Konfigurationsparameter, System-Spezifikationen, Datenbreiten, Daten bezüglich der angebotenen individuellen Funktionalitäten (Sampling Zeiten, Genauigkeiten, Datenraten, etc.), Beschreibungen, SI-Einheiten und allenfalls weitere Daten. Ein Endpunkt/Knoten kann über beliebig viele Prozessdaten (ein und aus) verfügen. Die Daten werden dezentral im System vorgehalten.

Insbesondere führt wenigstens ein Teil der Knoten und/oder Endpunkte des Netzwerks Informationen zu Prozess- und/oder Konfigurationsdaten des jeweiligen Knotens bzw. Endpunkts.

Die Knoten und/oder Endpunkte des Netzwerks können dazu eingerichtet sein, eine Eigensicherung relevanter Prozessdaten durchzuführen.

Sender /Anfrager (also DAQ Software, HMI, o.a.) müssen demnach keine Sekundärquelle anziehen., wie z.B. Daten aus einem Manual, xml-Files, o.ä., um die vollständige Nutzung eines Knotens bzw. Endpunkts sowie die eindeutige und vollständige Interpretation der jeweiligen Prozessdaten zu ermöglichen (Sensor für beliebige Messgrößen oder Aktor für beliebigen Input).

Das Netzwerk ist damit für den Verbraucher komplett selbstkonfigurierend in Bezug auf die Einstellungen sowie die Datenverarbeitung und -eingabe.

Die Kombination aus Codierung mit Symbolen, Eigensicherung und Paketweiterleitung über die verschiedenen Layer hinweg ermöglicht es, dass das Protokoll und die Kommunikation völlig unabhängig von jeweils übergeordneten Kanälen (TCP, USB, RS485, etc.) identisch funktionieren.

### KURZE BESCHREIBUNG DER FIGUREN

Weitere Vorteile und Merkmale der Erfindung werden aus der Beschreibung bevorzugter Ausführungsbeispiele und anhand der Figuren deutlich. Es zeigen:
- Figur 1: eine schematische Darstellung eines Netzwerks eines Datenverarbeitungssystems gemäß der vorliegenden Erfindung;
- Figur 2: eine schematische Darstellung von 8-Bit auf 7-Bit Verschlüsselung (Codierung).

### BESCHREIBUNG EINES SPEZIELLEN AUSFÜHRUNGSBEISPIELS

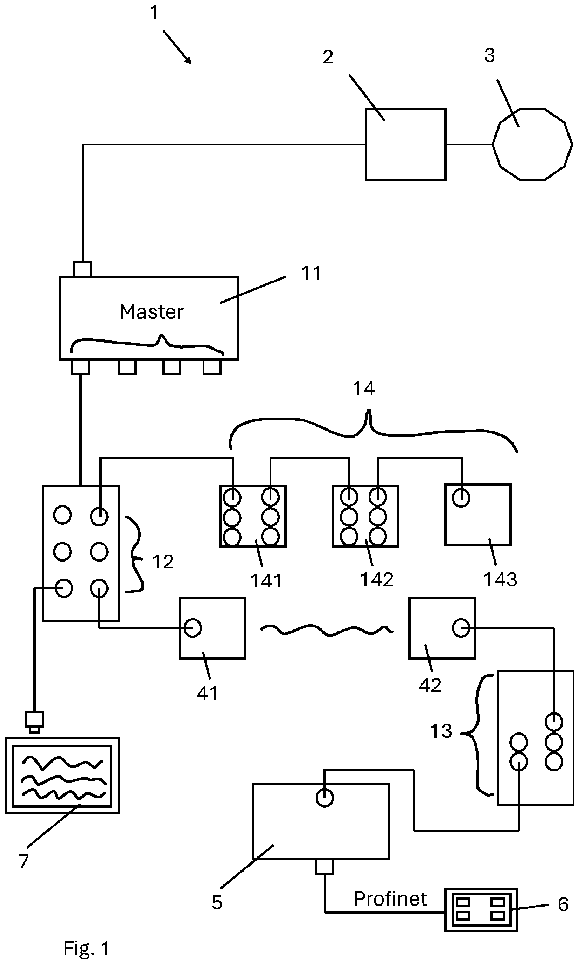

Die Fig. 1 zeigt beispielhaft ein Netzwerk 1. Es handelt sich um ein Sensor- und Aktor-Netzwerk, dessen Kommunikation völlig transparent über verschiedene Physical Layer und Data Link Layer wie TCP, Bluetooth geschleust wird.

Das Netzwerk 1 weist Knoten und Endpunkte auf. Die Knoten und Endpunkte kommunizieren drahtlos oder über verdrahtete Leitungen, wobei die Teilnehmer unterschiedlichen Physical Layern angehören können. So können die Knoten 11, 12, 13 und die über einen Bus 14 verbundenen Knoten 141, 142, 143 einem ersten Physical Layer (mit einem ersten Transport Protokoll) angehören. Der Knoten 2 kann ein Router sein, der das Netzwerk 1 mit dem Internet 3 verbindet. Er kommuniziert mit dem Master Knoten 11 beispielsweise über Ethernet.

Die Knoten 41 und 42 gehören einem zweiten Physical Layer an. Sie kommunizieren drahtlos über ein zweites Transport-Protokoll. Ein weiterer Knoten 5 kann über ein drittes Protokoll (dritter Physical Layer) mit einem Endpunkt 6 (z.B. Sensor) kommunizieren.

Außerdem weist das Netzwerk ein HMI 7 auf, das über ein viertes Protokoll mit dem Knoten 12 Daten austauschen kann.

Im Rahmen der Erfindung tauschen die Knoten und Endpunkte über dezentrale Kommunikation verschlüsselte Datenpakete aus. Die Datenpakete haben Anfangs- und Endsymbole und beinhalten die Ausgangs- und Endadresse sowie eine Prüfsumme.

Bei der Codierung von Datenpaketen wird ein neues Datenprotokoll für das gesamte System über die unterschiedlichen Transport- bzw. Datalink Layer hinweg bereitgestellt. Durch die Codierung der Daten entstehen außerdem Steuerungssymbole, die den Anfang und das Ende des Pakets symbolisieren. Das Protokoll ist für jeden 8- Bit Datenkanal geeignet.

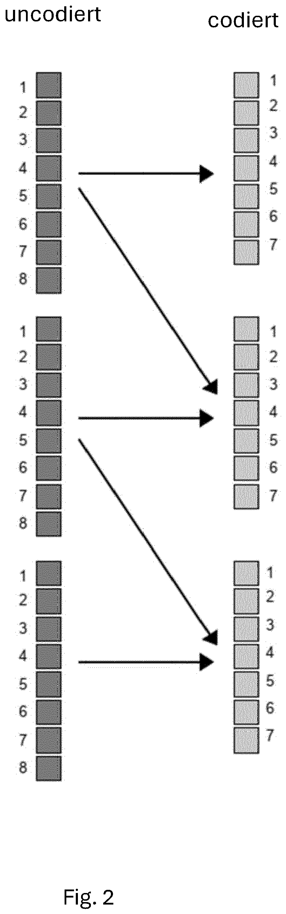

Eine fortlaufende Codierung von 8 Bit auf 7 Bit ist beispielhaft in der Fig. 2 dargestellt. Bei der Codierung wird jeweils ein Bit jeder 8-Bit (1 Byte) uncodierten Signalfolge in den nächsten codierten 7-Bit Block verschoben. Dadurch entsteht in jedem codierten Datenblock pro Byte jeweils ein freies Bit, das zum Tragen eines Steuerungssymbols verwendet werden kann. Damit wird das achte Bit als Steuerungssymbol Indikator (Präambel, Paketanfang und Paketende, etc.) verwendet. Durch die Codierung ist die Kommunikation auf jedem Voll- und Halbduplex 8-bit Stream (TCP, UDP, RS485, L2CAP, USB, etc.) des Physical Layers möglich.

Im Rahmen des Datenaustausches können die Knoten die Endadresse auscodieren, um ein Paket weiterzuleiten. Durch Decodierung bestimmter Positionen werden Anfangs- und Endadresse ausgelesen und das Paket weiter verschickt. Dabei müssen nur wenige Bytes decodiert werden. Im Rahmen des Netzwerks 1 führt jeder Knoten sein eigenes Routing durch.

Die Teilnehmer (Knoten/Endpunkte) des Netzwerks 1 tragen außerdem beliebig viele Prozessdaten (ein und aus), d.h. diese Daten werden dezentral im System vorgehalten. Datalink- und Prozessdaten sind somit alle in Endpunkten/Sensoren abgespeichert und können mittels der Systemsoftware bei einer Anfrage (z.B. durch das HMI 7) das System absuchen und die Daten in den Knoten finden. Der Sender/Anfrager 7 muss demnach keine Sekundärquelle verwenden, um die vollständige Nutzung eines Knotens bzw. Endpunkts zu ermöglichen.

Das Netzwerk ist damit für den Verbraucher komplett selbst konfigurierend in Bezug auf die Einstellungen sowie die Datenverarbeitung und -eingabe.

Soll ein neuer Teilnehmer in das Netzwerk 1 integriert werden, so konfiguriert sich alles von selbst. Sobald beispielsweise ein neuer Sensor an eine Insel angeschlossen wird, kontaktiert die Insel einen (Adress-)Master, der eine Adresse vergibt. Anschließend kann der Sensor an der (dezentralen) Kommunikation im Netzwerk 1 teilnehmen.

## Patentansprüche

1. Datenverarbeitungssystem mit einem Netzwerk (1) umfassend mehrere Knoten (11, 12, 13, 141, 142, 143, 41, 42, 5) und/oder Endpunkte (6, 7) sowie drahtlose und/oder drahtgebundene Kommunikationsverbindungen zwischen einzelnen Knoten und/oder Endpunkten, wobei der Datenaustausch über binäre Datenpakete erfolgt, wobei die Datenpakete codiert sind, und jeweils wenigstens ein Steuerungssymbol aufweisen.

2. Datenverarbeitungssystem nach Anspruch 1, wobei die Knoten und/oder Endpunkte des Netzwerks eingerichtet sind, die Datenpakete wenigstens teilweise zu codieren und/oder zu decodieren.

3. Datenverarbeitungssystem nach einem der vorhergehenden Ansprüche, wobei die Knoten und/oder Endpunkte des Netzwerks dazu eingerichtet sind, Endadressen und/oder die Paketgröße aus Paketen zu extrahieren und zu decodieren.

4. Datenverarbeitungssystem nach einem der vorhergehenden Ansprüche, wobei die Übertragung der codierten Pakete über ein einheitliches Protokoll erfolgt.

5. Datenverarbeitungssystem nach einem der vorhergehenden Ansprüche, wobei das Datenverarbeitungssystem wenigstens zwei verschiedene physikalische Layer bzw. Transport Layer aufweist.

6. Datenverarbeitungssystem nach einem der vorhergehenden Ansprüche, wobei das Netzwerk so eingerichtet ist, dass die Übertragung der codierten Datenpakete einheitlich über zwei oder mehrere physikalische Layer erfolgt.

7. Datenverarbeitungssystem nach einem der vorhergehenden Ansprüche, wobei die Steuerungssymbole wenigstens ein Anfangssymbol und ein Endsymbol aufweisen, die den Anfang bzw. das Ende des Datenpakets kennzeichnen.

8. Datenverarbeitungssystem nach einem der vorhergehenden Ansprüche, wobei ein Knoten die darunter liegenden Knoten/Endpunkte synchronisiert, und/oder wenigstens ein Knoten/Endpunkt darüber liegende Knoten synchronisiert.

9. Datenverarbeitungssystem nach einem der vorhergehenden Ansprüche, wobei das Netzwerk einen Hauptknoten aufweist, welcher für die Ausgabe von Adressen zuständig ist.

10. Datenverarbeitungssystem nach einem der vorhergehenden Ansprüche, wobei jeder Knoten und/oder Endpunkt des Netzwerks einen Router aufweist.

11. Datenverarbeitungssystem nach einem der vorhergehenden Ansprüche, wobei das Netzwerk ein Sensor- und/oder Aktornetzwerk mit wenigstens einem Sensor (6) und/oder Aktor ist.

12. Datenverarbeitungssystem nach einem der vorhergehenden Ansprüche, wobei das Netzwerk zwei oder mehrere datenverarbeitende Endpunkte, beispielsweise HMI (Human Machine Interfaces, 7), Sensoren, Aktoren, o.a., aufweist.

13. Datenverarbeitungssystem nach einem der vorhergehenden Ansprüche, wobei das Netzwerk eines oder mehrere datenverarbeitende, datendarstellende und datenweiterleitende Endpunkte und/oder Knoten aufweist.

14. Datenverarbeitungssystem nach einem der vorhergehenden Ansprüche, wobei die Knoten und/oder Endpunkte, insbesondere die Sensoren, einen eindeutigen Identifikator aufweisen, der eine Identifikation durch andere Knoten/Endpunkte ermöglicht.

15. Datenverarbeitungssystem nach einem der vorhergehenden Ansprüche, wobei die Knoten und/oder Endpunkte des Netzwerks dazu eingerichtet sind, eine Eigensicherung relevanter Prozessdaten durchzuführen.

16. Datenverarbeitungssystem nach einem der vorhergehenden Ansprüche, wobei wenigstens ein Teil der Knoten und/oder Endpunkte des Netzwerks Informationen zu Prozess- und/oder Konfigurationsdaten des jeweiligen Knotens bzw. Endpunkts führt.

17. Datenverarbeitungssystem nach einem der vorhergehenden Ansprüche, wobei das Datenverarbeitungssystem selbstkonfigurierend ist.

## Geänderte Patentansprüche

### Geänderte Patentansprüche gemäss Regel 137(2) EPÜ.

1. Datenverarbeitungssystem mit einem Netzwerk (1) umfassend mehrere Knoten (11, 12, 13, 141, 142, 143, 41, 42, 5) und/oder Endpunkte (6, 7) sowie drahtlose und/oder drahtgebundene Kommunikationsverbindungen zwischen einzelnen Knoten und/oder Endpunkten, wobei der Datenaustausch über binäre Datenpakete erfolgt, **dadurch gekennzeichnet, dass** die Datenpakete mittels einer 8 Bit zu 7 Bit Verschlüsselung codiert sind, und jeweils wenigstens ein Steuerungssymbol auf einem durch die Codierung frei gewordenen Bit aufweisen, wobei die Knoten und/oder Endpunkte des Netzwerks dazu eingerichtet sind, Endadressen und/oder die Paketgröße aus Paketen zu extrahieren und zu decodieren.

2. Datenverarbeitungssystem nach Anspruch 1, wobei die Knoten und/oder Endpunkte des Netzwerks eingerichtet sind, die Datenpakete wenigstens teilweise zu codieren und/oder zu decodieren.

3. Datenverarbeitungssystem nach einem der vorhergehenden Ansprüche, wobei die Übertragung der codierten Pakete über ein einheitliches Protokoll erfolgt.

4. Datenverarbeitungssystem nach einem der vorhergehenden Ansprüche, wobei das Datenverarbeitungssystem wenigstens zwei verschiedene physikalische Layer bzw. Transport Layer aufweist.

5. Datenverarbeitungssystem nach einem der vorhergehenden Ansprüche, wobei das Netzwerk so eingerichtet ist, dass die Übertragung der codierten Datenpakete einheitlich über zwei oder mehrere physikalische Layer erfolgt.

6. Datenverarbeitungssystem nach einem der vorhergehenden Ansprüche, wobei die Steuerungssymbole wenigstens ein Anfangssymbol und ein Endsymbol aufweisen, die den Anfang bzw. das Ende des Datenpakets kennzeichnen.

7. Datenverarbeitungssystem nach einem der vorhergehenden Ansprüche, wobei ein Knoten die darunter liegenden Knoten/Endpunkte synchronisiert, und/oder wenigstens ein Knoten/Endpunkt darüber liegende Knoten synchronisiert.

8. Datenverarbeitungssystem nach einem der vorhergehenden Ansprüche, wobei das Netzwerk einen Hauptknoten aufweist, welcher für die Ausgabe von Adressen zuständig ist.

9. Datenverarbeitungssystem nach einem der vorhergehenden Ansprüche, wobei jeder Knoten und/oder Endpunkt des Netzwerks einen Router aufweist.

10. Datenverarbeitungssystem nach einem der vorhergehenden Ansprüche, wobei das Netzwerk ein Sensor- und/oder Aktornetzwerk mit wenigstens einem Sensor (6) und/oder Aktor ist.

11. Datenverarbeitungssystem nach einem der vorhergehenden Ansprüche, wobei das Netzwerk zwei oder mehrere datenverarbeitende Endpunkte, beispielsweise HMI (Human Machine Interfaces, 7), Sensoren, Aktoren, o.a., aufweist.

12. Datenverarbeitungssystem nach einem der vorhergehenden Ansprüche, wobei das Netzwerk eines oder mehrere datenverarbeitende, datendarstellende und datenweiterleitende Endpunkte und/oder Knoten aufweist.

13. Datenverarbeitungssystem nach einem der vorhergehenden Ansprüche, wobei die Knoten und/oder Endpunkte, insbesondere die Sensoren, einen eindeutigen Identifikator aufweisen, der eine Identifikation durch andere Knoten/Endpunkte ermöglicht.

14. Datenverarbeitungssystem nach einem der vorhergehenden Ansprüche, wobei die Knoten und/oder Endpunkte des Netzwerks dazu eingerichtet sind, eine Eigensicherung relevanter Prozessdaten durchzuführen.

15. Datenverarbeitungssystem nach einem der vorhergehenden Ansprüche, wobei wenigstens ein Teil der Knoten und/oder Endpunkte des Netzwerks Informationen zu Prozess- und/oder Konfigurationsdaten des jeweiligen Knotens bzw. Endpunkts führt.

16. Datenverarbeitungssystem nach einem der vorhergehenden Ansprüche, wobei das Datenverarbeitungssystem selbstkonfigurierend ist.
